# EUROPEAN PATENT SPECIFICATION

(11) **EP 1 328 781 B1**
(45) Date of publication and mention of the grant of the patent: **08.11.2006**
(21) Application number: 01963367.6
(22) Date of filing: 12.09.2001
(51) Int. Cl.: G01G 11/00

(54) **METHOD AND APPARATUS FOR WEIGHING**
VERFAHREN UND VORRICHTUNG ZUM WÄGEN
PROCEDE ET APPAREIL DE PESEE

(30) Priority: 12.09.2000 IS 562600
(43) Date of publication of application: 23.07.2003
(73) Proprietor: Marel HF., 112 Reykjavik (IS)
(72) Inventor: OLAFSSON, Jon, Thor, IS-210 Gardabaer (IS)
(74) Representative: Hardarson, Gunnar Örn
(86) International application number: PCT/IS2001/000018
(87) International publication number: WO 2002/023140

(56) References cited:
- GB-A- 2 160 985
- US-A- 4 550 793
- US-A- 4 660 665
- US-A- 4 788 930

## Description

### Technical Field

The invention relates to a method and apparatus for weighing by conveyor-type weighing unit, where a conveyor belt forming an endless loop is transported along a guiding unit, defining a first conveying direction and extending in-between the top sides of a opposite arranged rollers. The belt is driven in a revolving manner and transported over a weighing device in conveying direction. The weighing device being a part of the guiding unit performs continuos weighing of objects transported along the conveyor. Examples of conveyor-type weighing units are given in GB-A-2160985, US-A-4660665 and US-A-4550793 and US-A-4788930.

### Background of the Invention

Conveyor weighing technique has been known for quite some time. Conveyor weighing apparatus have mainly been used for weighing of bulk material, such as grain, rocks and other materials. There is however a growing need for accurate and high speed weighing units, both for continuous weighing of bulk material and for weighing and grading of individual objects such as food pieces. In many fields of food processing it is essential to measure as exact as possible the weight of an object being processed, prior to various types of operations, such as sorting/ grading, cutting, or packaging. The weighing of individual food pieces transported along a conveyor is today an very important operation in processing of f.ex., fish-fillets and trimming of meat. If one has to weigh every object individually on a stationary weighing unit, the total processing speed would be diminished.

There is no question that the aforementioned applies not only to processing of fish and meat, but also to other types of food. The main disadvantage of the existing conveyor-type weighing apparatus, especially those available for the food processing industry is lack of robustness and accuracy.

### Brief Description of the Invention

The aim of the invention is to provide accurate conveyor-type weighing unit capable of weighing objects of varying dimension transported on a conveyor belt and eliminate the influence of adjacent objects on the conveyor when weighing a particular object.

Most conveyor type weighing devices must have the objects positioned on the conveyor belt with certain minimum distance between to objects. It is time consuming to place every object with a certain minimum distance from the next object. Most often is it the length of the weighing platform that determines the minimum distance between the objects. If the objects are to close to each other, weighing of a single object alone can not be conducted.

It is therefore the aim of this invention to provide device capable of overcoming these disadvantages of the known methods.

The conveyor type weighing unit according to the invention described herein, is characterised in the that guiding unit of the weighing device is tilted upwardly from the horizontal plane and thereby forms an upwardly incline conveying path for the belt. The conveyor belt is equipped with dividers forming number of object receiving slots. By this, each object is divided into certain receiving slot. Further by tilting the guiding unit upwardly in the conveying direction the objects are directed, by force of gravity, towards the next divider behind them, forming the end of the receiving slot. Thereby it is achieved that the distance between two adjacent objects always be the same or very close to the distance between two adjacent dividers. By adjusting the length of the platform to the distance between the dividers, weighing of every object can be obtained. Also the distance between the dividers being equal or greater than the length of the weighing platform of the weighing means.

Further the invention is characterised in that the tilting of the guiding unit is about 10 - 60°, preferably 25 - 50°, most preferably about 35 - 45° from the horizontal plane.

Furthermore the weighing unit comprising a conveyor belt detecting sensor for collecting information of the position of the conveyor belt transporting the objects arriving

At last the method of weighing by this conveyor type weighing device is characterised in that the first conveying direction being tilted upwardly from the horizontal plane, the conveyor belt being equipped with dividers forming number of object receiving slots in the belt, the objects to be weighed being placed therein, the objects being separated from each other by the dividers and the force of gravity as the belt is transported in the tilted position, the objects therefor leaning against the dividers as transported over the weighing unit. Also the distance between the dividers is made equal or greater than the length of the weighing platform of the weighing means.

### Brief description of the drawings.

The invention is explained in greater details with reference to the accompanying drawings, in which
Figure 1 shows a side view of the tilted weighing device with a processing machine,
Figure 2 shows the weighing device seen form above,
Figure 3 shows a cross sectional cut of the weighing platform.

### Detailed description of the-prsently preferred exeplary embodiment of the Invention.

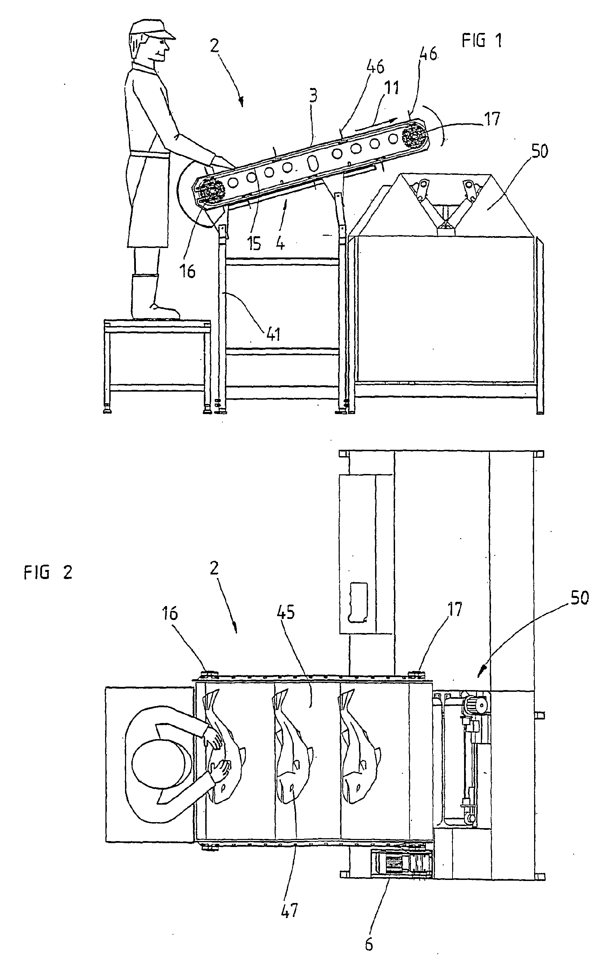

The apparatus illustrated in the figure 1 and 2 comprises a conveyor-type weighing unit (2) arranged on a stationary supporting frame structure (41). A conveyor belt (3) being a part of the conveyor-type weighing unit forms an endless loop unit, which is driven in a revolving manner by a driving unit (6). The conveyor belt is transported along a guiding unit (15) arranged in direction extending in-between the top sides of reversing rollers (16, 17). The belt is arranged with number of dividers (46) dividing the belt up to slots (45) for the objects to be weighed. A weighing means (4) is incorporated as a part of the guiding unit and thereby forming a part of a platform the conveyor belt is transported along. As the belt is transported along the guiding unit (15) continuous weighing measurements are made by the weighing means. The section of the belt (L₁) placed over the weighing platform (7) is weighed at each time. A computer data processing unit (not shown) is connected to respective parts of the equipment for monitoring and controlling the operation. The weighing unit is connected to a fish processing machine (50) of any preferred type that requires in-weighing of the objects prior to processing.

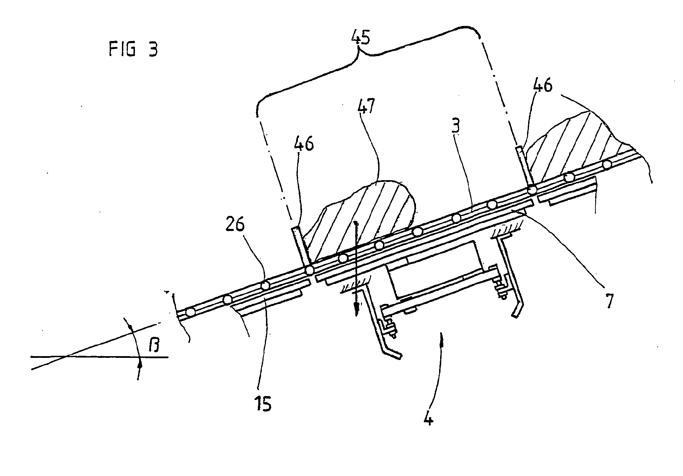

Figure 3 shows cross sectional cut of the weighing platform. The weighing unit is tilted upwardly about the angle E, which can be about 10 - 60°, depending on the nature of the object to be weighed. More preferably 25 - 50°, most preferably about 35 - 45° from the horizontal plane. The object to be weighed is by force of gravity forced against the upper side of the divider (46) forming the object receiving slots (45). When the object receiving slot (45) is placed over the weighing platform (7) a weighing is performed. By this method each object to be weighed is by force of gravity placed against the upper side of the divider wall (46) and thereby forming uniform distance between the next objects. By simple trigonometry, taking into account the tilting angle E, the actual weight of the object can be achieved.

The objects (47) to be weighed are placed one by one in a receiving slot (45) on the conveyor belt (3). As the guiding unit (15) for the belt is tilted upwardly in the conveying direction, preferably around 35 - 45°, the object is automatically moved toward the next dividing wall (46) behind the object. This is due to the movement of the belt and the tilting and thereby increased force on the object towards the dividing wall. By this it is possible to minimise the spacing needed between the objects.

It thus will be appreciated that the objects of the present invention have been fully and effectively accomplished. It will be realised, however, that the foregoing preferred specific embodiment has been shown and described for the purpose of this invention and are subject to change without departure from its basic principles, the invention being solely defined by the appended claims.

## Claims

1. Conveyor-type weighing unit (2) for weighing objects transported along a conveyor, comprising; a frame (41), a conveyor belt (3) forming an endless loop, a guiding unit (15), defining a first conveying direction (11)extending in-between the top sides of two opposite arranged rollers (16, 17), a weighing device (4) forming a part of said guiding unit (15), the belt driven in a revolving manner by a driving unit (6) and transported over the weighing device in a conveying direction, **characterised in**, the guiding unit (15) being tilted upwardly from the horizontal plane and thereby forming an upwardly incline conveying path for the belt, the conveyor belt (3) being equipped with dividers (46) forming number of object receiving slots (45), the distance between the dividers (46) being equal or greater than the length (L₁) of the weighing platform (7) of the weighing device (4).

2. Conveyor-type weighing unit (2), according to claim 1, **characterised in** the tilting of the guiding unit (15) is about 10 - 60°, preferably 25 - 50°, most preferably about 35 - 45° from the horizontal plane.

3. Conveyor-type weighing unit (2), according to one or more of claim 1 or 2, **characterised in** the weighing unit (2) comprising a object detecting sensor (19) connected to the data processing unit for collecting information of the position of object receiving slots (45) arriving on the conveyor belt (3).

4. Conveyor-type weighing unit (2), according to one or more of claim 1 - 4, **characterised in** the weighing unit (2) comprising a conveyor belt detecting sensor for collecting information of the position of the conveyor belt (3) transporting the objects.

5. Method of weighing objects by a conveyor-type weighing unit (2), where the conveyor belt (3), forming a endless loop, is transported along a guiding unit (15), defining a first horizontal conveying direction (11) extending in-between the top sides of a opposite arranged rollers (16, 17), a weighing device (4) being a part of said guiding unit (15), the belt driven in a revolving manner by a driving unit (6) and transported over the weighing device (4) in a conveying direction, **characterised in**, the first conveying direction (11) being tilted upwardly from the horizontal plane, the conveyor belt (3) being equipped with dividers (46) forming number of object receiving slots (45) on the belt (3), the objects to be weighed being placed therein, the objects being separated from each other by the dividers (46) and the force of gravity as the belt (3) is transported in the tilted position, the objects therefor leaning against the dividers (46) as transported over the weighing unit, the distance between the dividers (46) being equal or greater than the length (L₁) of the weighing platform (7) of the weighing device (4).

## Patentansprüche

1. Wiegeeinheit des Fördertyps (2) zum Wiegen von Objekten, die von einer Fördervorrichtung transportiert werden, die Folgendes aufweist: einen Rahmen (41), ein Förderband (3), das eine Endlosschleife bildet, eine Führungseinheit (15), die eine erste Förderrichtung (11) begrenzt, die sich zwischen den oberen Seiten von zwei gegenüberliegend angeordneten Rollen (16, 17) erstreckt, eine Wiegevorrichtung (4), die einen Teil der Führungseinheit (15) bildet, wobei das Band in einer kreisende Art und Weise durch eine Antriebseinheit (6) angetrieben ist, und in einer Förderrichtung über die Wiegevorrichtung transportiert wird, **dadurch gekennzeichnet, dass** die Führungseinheit (15) von der horizontalen Ebene aufwärts geneigt ist und so einen sich aufwärts neigenden Förderweg für das Band bildet, wobei das Förderband (3) mit Trennmitteln (46) ausgestattet ist, die eine Anzahl von Objektaufnahmeschlitzen (45) bilden, wobei der Abstand zwischen den Trennmitteln (46) gleich oder größer als eine Länge (L₁) der Wiegeplattform (7) der Wiegevorrichtung (4) ist.

2. Wiegeeinheit des Fördertyps (2) nach Anspruch 1, **dadurch gekennzeichnet, dass** die Neigung der Führungseinheit (15) etwa 10 bis 60 ° beträgt, vorzugsweise 25 bis 50 °, und insbesondere 35 bis 45 ° von der horizontalen Ebene.

3. Wiegeeinheit des Fördertyps (2) nach einem oder beiden der Ansprüche 1 oder 2, **dadurch gekennzeichnet, dass** die Wiegeeinheit (2) einen Objekterfassungssensor (19) aufweist, der mit der Datenverarbeitungseinheit verbunden ist, um Information zu der Position von Objektaufnahmeschlitzen (45) zu sammeln, die sich auf dem Förderband (3) nähern.

4. Wiegeeinheit des Fördertyps (2) nach einem oder mehreren der Ansprüche 1 bis 3, **dadurch gekennzeichnet, dass** die Wiegeeinheit (2) einen Förderbanderfassungssensor zum Sammeln von Information zu der Position des Förderbands (3) aufweist, das die Objekte transportiert.

5. Verfahren zum Wiegen von Objekten durch eine Wiegeeinheit des Fördertyps (2), wobei das Förderband (3), das eine Endlosschleife bildet, entlang einer Führungseinheit (15) transportiert wird, die eine erste horizontale Förderrichtung (11) begrenzt, die sich zwischen den oberen Seiten von gegenüberliegend angeordneten Rollen (16, 17) erstreckt, wobei eine Wiegevorrichtung (4) ein Teil der Führungseinheit (15) ist, wobei das Band in einer kreisenden Art und Weise durch eine Antriebseinheit (6) angetrieben wird und über die Wiegevorrichtung (4) in eine Förderrichtung transportiert wird, **dadurch gekennzeichnet, dass** die erste Förderrichtung (11) von der horizontalen Ebene aufwärts geneigt ist, wobei das Förderband (3) mit Trennmitteln (46) ausgestattet ist, die eine Anzahl von Objektaufnahmeschlitzen (45) an dem Band (3) bilden, wobei die zu wiegenden Objekte durch die Trennmittel (46) und durch die Schwerkraft voneinander getrennt werden, während das Band in der geneigten Position transportiert wird, weshalb sich die Objekte gegen die Trennmittel (46) lehnen, während sie über die Wiegeeinheit transportiert werden, wobei der Abstand zwischen den Trennmitteln (46) gleich oder größer als eine Länge (L₁) der Wiegeplattform (7) der Wiegevorrichtung (4) ist.

## Revendications

1. Unité de pesage de type à convoyeur (2) pour peser des objets transportés sur un convoyeur, comprenant : un châssis (41), un tapis roulant (3) formant une boucle sans fin, une unité de guidage (15), définissant une première direction de convoyage (11) s'étendant entre les côtés supérieurs de deux rouleaux agencés à l'opposé l'un de l'autre (16, 17), un dispositif de pesage (4) faisant partie de ladite unité de guidage (15), le tapis roulant étant entraîné d'une manière rotative par une unité d'entraînement (6) et étant transporté sur le dispositif de pesage dans une direction de convoyage,
**caractérisée en ce que** l'unité de guidage (15) est inclinée vers le haut par rapport au plan horizontal pour former ainsi un chemin de convoyage incliné vers le haut pour le tapis roulant, le tapis roulant (3) étant équipé de diviseurs (46) formant un certain nombre de logements de réception d'objet (45), la distance entre les diviseurs (46) étant supérieure ou égale à la longueur (L₁) de la plate-forme de pesage (7) du dispositif de pesage (4).

2. Unité de pesage de type à convoyeur (2) selon la revendication 1, **caractérisée en ce que** l'unité de guidage (15) est inclinée d'environ 10 à 60°, de préférence de 25 à 50°, et encore plus de préférence d'environ 35 à 45° par rapport au plan horizontal.

3. Unité de pesage de type à convoyeur (2) selon une ou plusieurs des revendications 1 et 2, **caractérisée en ce que** l'unité de pesage (2) comprend un capteur de détection d'objet (19) connecté à l'unité de traitement de données pour recueillir des informations sur la position des logements de réception d'objet (45) arrivant sur le tapis roulant (3).

4. Unité de pesage de type à convoyeur (2) selon une ou plusieurs des revendications 1 à 4, **caractérisée en ce que** l'unité de pesage (2) comprend un capteur de détection de tapis roulant pour recueillir des informations sur la position du tapis roulant (3) transportant les objets.

5. Procédé de pesage d'objet par une unité de pesage de type à convoyeur (2), où le tapis roulant (3), formant une boucle sans fin, est transporté le long d'une unité de guidage (15), définissant une première direction de convoyage horizontal (11) s'étendant entre les côtés supérieurs de deux rouleaux agencés à l'opposé l'un de l'autre (16, 17), un dispositif de pesage (4) faisant partie de ladite unité de guidage (15), le tapis roulant étant entraîné d'une manière rotative par une unité d'entraînement (6) et transporté sur le dispositif de pesage (4) dans une direction de convoyage,
**caractérisé en ce que** la première direction de convoyage (11) est inclinée vers le haut par rapport au plan horizontal, le tapis roulant (3) est équipé de diviseurs (46) formant un certain nombre de logements de réception d'objet (45) sur le tapis roulant (3), les objets à peser sont placés à l'intérieur de ceux-ci, les objets étant séparés entre eux par les diviseurs (46) et la force de gravité au fur et à mesure que le tapis roulant (3) est transporté dans la position inclinée, les objets s'appuyant ainsi contre les diviseurs (46) en étant transportés sur l'unité de pesage, et la distance entre les diviseurs (46) est supérieure ou égale à la longueur (L₁) de la plate-forme de pesage (7) du dispositif de pesage (4).
